# EUROPEAN PATENT APPLICATION

(11) **EP 4 738 078 A1**
(43) Date of publication of application: **06.05.2026**
(21) Application number: 24830781.1
(22) Date of filing: 25.06.2024
(51) Int. Cl.: G06F 3/048, H04N 21/44

(54) **METHOD AND APPARATUS FOR SEARCHING, DEVICE, AND STORAGE MEDIUM**

(30) Priority: 27.06.2023 CN 202310771888
(71) Applicant: BEIJING YOUZHUJU NETWORK TECHNOLOGY CO. LTD., Beijing 101299 (CN)
(72) Inventor: SONG, Jie, Beijing 100028 (CN)
(74) Representative: Isarpatent
(86) International application number: PCT/CN2024/101464
(87) International publication number: WO 2025/002142

(57) **Abstract**

Embodiments of the disclosure provide a method, an apparatus, a device and a storage medium for searching. The method includes: presenting (510) a playback interface of video content; presenting (520), in a playback process of the video content, a product search entry corresponding to a set of product items, the set of product items being determined by recognizing a set of product objects from the video content; and presenting (530), based on selection of the product search entry, a product search interface corresponding to the set of product items. Based on the above manner, the embodiments of the present disclosure can automatically provide the product search entry associated with a set of products in the video content by recognizing the video content, and can provide the product associated with the video to the user based on the selection of the product search entry by the user, which can improve the interaction experience of the user.

## Description

This application claims the benefit of Chinese Patent Application No. 202310771888.8, filed June 27, 2023, entitled "METHOD, APPARATUS, DEVICE AND STORAGE MEDIUM FOR SEARCHING", the entire content of which is incorporated herein by reference.

### FIELD

Example embodiments of the present disclosure generally relate to the field of computers, and in particular, to a method, an apparatus, a device and a storage medium for searching.

### BACKGROUND

With the advancement of computer technology, various forms of multimedia content have become one of the primary means for people to access content. Multimedia content may include, for example, pictures, videos, text, and audio. Some creators share specific products by producing multimedia content. As a result, how viewers can more efficiently obtain product information recommended or featured in videos has emerged as a key focus of current attention.

### SUMMARY

In a first aspect of the present disclosure, a method for searching is provided. The method includes: presenting a playback interface of video content; presenting, in a playback process of the video content, a product search entry corresponding to a set of product items, the set of product items being determined by recognizing a set of product objects from the video content; and presenting, based on selection of the product search entry, a product search interface corresponding to the set of product items.

In a second aspect of the present disclosure, an apparatus for searching is provided. The apparatus includes: a playback interface presentation module configured to present a playback interface of video content; a search entry presentation module configured to present, in a playback process of the video content, a product search entry corresponding to a set of product items, the set of product items being determined by recognizing a set of product objects from the video content; and a search interface presentation module configured to present, based on selection of the product search entry, a product search interface corresponding to the set of product items.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the present disclosure, a computer-readable storage medium is provided. The medium stores a computer program, and when the computer program is executed by the processor, the method in the first aspect is implemented.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments of the present disclosure can be implemented;
FIG. 2A to FIG. 2C illustrate schematic diagrams of examples of playback interfaces according to some embodiments of the present disclosure;
FIG. 3 illustrates a schematic diagram of an example of a product search interface according to some embodiments of the present disclosure;
FIG. 4A to FIG. 4B illustrate schematic diagrams of examples of comment interfaces according to some embodiments of the present disclosure;
FIG. 5 illustrates a flowchart of an example process for searching according to some embodiments of the present disclosure;
FIG. 6 illustrates a schematic structural block diagram of an apparatus for searching according to some embodiments of the present disclosure; and
FIG. 7 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and/or use of data, and the like. These aspects all follow the corresponding laws and regulations and related regulations. In the embodiments of the present disclosure, all data is collected, obtained, handled, processed, forwarded, used, etc., on the premise that the user knows and confirms. Accordingly, when implementing the embodiments of the present disclosure, the types of the data or information that may be involved, the usage scope, the usage scenario, and the like should be notified to the user and obtain the authorization of the user in an appropriate manner according to the relevant laws and regulations. The specific notification and/or authorization manner may vary according to actual situations and application scenarios, and the scope of the present disclosure is not limited in this respect.

According to the solutions in the present specification and the embodiments, if personal information processing is involved, processing may be performed on the premise of having a legality basis (for example, obtaining consent of a personal information subject, or necessary for performing a fulfillment contract), and processing only within a specified or agreed range. That users rejecting personal information other than necessary information required by the basic function would not affect the use of the basic functions by the users.

As briefly mentioned above, multimedia content has become an important medium for product sharing, and with the development of computer technology, product sharing in video content has become particularly common. In some scenarios, video creators may share products in videos by adding product links or anchor points, but such sharing approach may result in strong marketing impressions, which negatively impact viewers' viewing experience while also affecting the creator's persona and video traffic. In other scenarios, author comments associated with products in the comment section may be set as the search entry, allowing users to directly access a corresponding product search interface by clicking the search entry. However, such search interface cannot directly display product information, requiring users to manually perform further searches to identify target products.

To this end, embodiments of the present disclosure propose an improved solution for searching. According to the solution, a playback interface of video content may be presented, and in a playback process of the video content, a product search entry corresponding to a set of product items in the video content is presented. The product search interface corresponding to the set of product items may be presented based on selection of the product search entry.

Therefore, embodiments of the present disclosure may automatically provide the product search entry associated with the set of products in the video content by recognizing the video content, and may provide the product associated with the video for the user based on the selection of the product search entry by the user, so that the interaction experience of the user may be improved.

Various example implementations of the solution are described in detail below in conjunction with the accompanying drawings.

### Example Environment

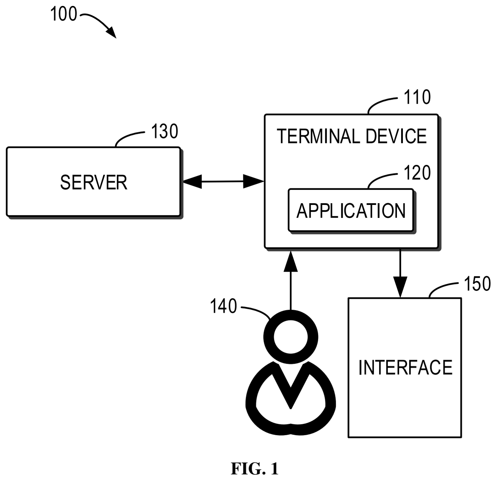

FIG. 1 illustrates a schematic diagram of an example environment 100 in which embodiments of the present disclosure can be implemented. As shown in FIG. 1, the example environment 100 may include a terminal device 110.

In the example environment 100, an application 120 is installed in the terminal device 110. The user 140 may interact with the application 120 via the terminal device 110 and/or its attachment device. The application 120 may be a social application, a content sharing application, a shopping application, or any other suitable application.

In the environment 100 of FIG. 1, if the application 120 is in an active state, the application 120 may provide services such as creation or playback of multimedia content and/or goods searches or purchases for the user 140.

In addition, the terminal device 110 may present an interface 150 of the application 120. Depending on the specific service provided, the interaction behavior/predetermined operation of the user, etc., the content presented by the interface 150 may also vary.

In some embodiments, terminal device 110 communicates with a server 130 to enable provisioning of services to application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.).

The server 130 may be a standalone physical server, a server cluster composed of multiple physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide a background service for an application 120 that supports content presentation in the terminal device 110.

A communication connection may be established between the server 130 and the terminal device 110. The communication connection may be established in a wired manner or a wireless manner. Communication connections may include, but are not limited to, Bluetooth connections, mobile network connections, universal serial bus connections, wireless fidelity connections, etc., and embodiments of the present disclosure are not limited in this respect. In an embodiment of the present disclosure, the server 130 and the terminal device 110 may implement signaling interaction with a communication connection between the server 130 and the terminal device 110.

It should be understood that the structures and functions of the various elements in the environment 100 are described for illustrative purposes only and do not imply any limitation to the scope of the present disclosure.

### Example Interface

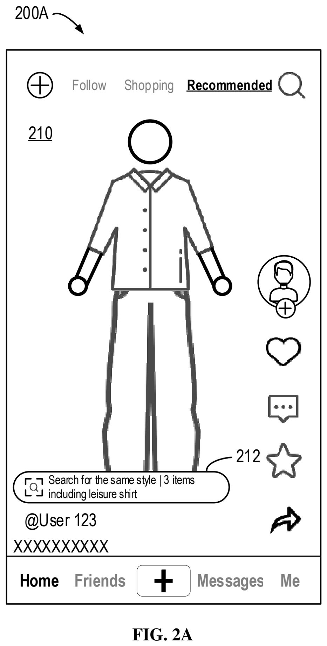

FIG. 2A to FIG. 2B are schematic diagrams illustrating an example of a playback interface according to some embodiments of the present disclosure.

As shown in FIG. 2A, when the application 120 is in a running state, the terminal device 110 may present a playback interface 200A corresponding to video content 210. In some embodiments, in response to the application 120 being in the running state, the terminal device 110 may present the playback interface 200A of the video content 210 by default. In some embodiments, when the application 120 is in the running state, the terminal device 110 may also provide the playback interface 200A shown in FIG. 2A when receiving an access request for the video content 210. It should be understood that the video content 210 and the playback interface 200A may be any suitable style, and the present disclosure is not intended to be limited to a specific style of the video content and the playback interface.

In a playback process of the video content 210, the terminal device 110 may present a product search entry 212 corresponding to a set of product items. The set of product items may be determined by recognizing a set of product objects in the video content.

For example, the video content 210 may be acquired by a suitable electronic device (for example, the server 140 shown in FIG. 1 or another suitable electronic device), and the product object in the video 210 may be detected, for example, according to a product object recognition model. It should be understood that the product object (e.g., a product portion appearing in a video frame) included in the video content may be detected by any suitable recognition technique.

As an example, after the video content 210 is uploaded by the poster of the video content 210, the server 140 may perform detection of the product object in the video content 210 for provision of the product search entry associated with the corresponding product item in the interface 200A.

In some embodiments, the set of product items may include all product items determined based on the video content 210. In some embodiments, the server 140 may, for example, determine a product item corresponding to a product object whose recognition confidence level is greater than a threshold, and ignore a product object whose recognition confidence level is less than or equal to the threshold.

In some embodiments, the product search entry 212 may, for example, indicate the number of the set of product items associated with the video content 210. As shown in FIG. 2A, the product search entry 212 may indicate "3 products" to represent that there are 3 associated product items with the video content 210.

In some embodiments, the product search entry 212 may further indicate textual description information item of at least one of the set of product items associated with the video content 210. For example, taking FIG. 2A as an example, the product search entry 212 may indicate category information item of the at least one product item, such as "leisure shirt". It should be understood that the product search entry 212 may further indicate textual description information of other categories, examples of which may include, but are not limited to: name, brand, merchant, price, and the like.

In some embodiments, the terminal device 110 may present the product search entry 212 in a playback area for playing the video content 210. As shown in FIG. 2A, such product search entry 212 may, for example, be presented above the description information of the video content 210, which may also be referred to as an "anchor" location.

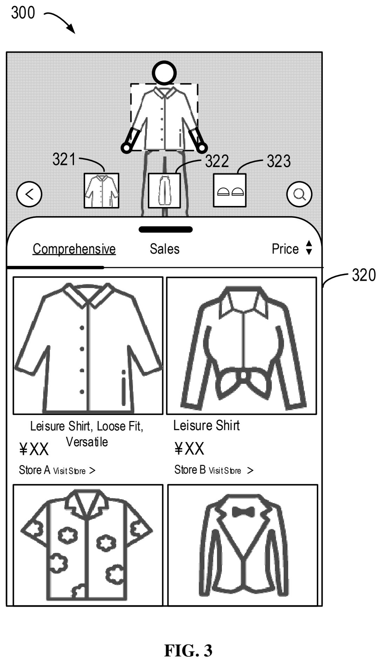

In some embodiments, the terminal device 110 may present the product search interface based on a trigger operation for the search entry 212. Details regarding the product search interface are described below in connection with FIG. 3.

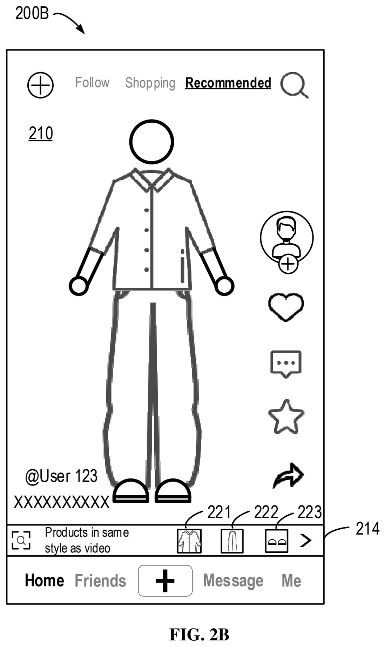

FIG. 2B illustrates an example playback interface 200B according to another example of the present disclosure. As shown in FIG. 2B, different from the playback interface 200A shown in FIG. 2A, the search entry 214 provided by the terminal device 110 in the playback interface 200B may be, for example, located above the bottom navigation bar of the playback interface 200B, which may also referred to as a "bottom strip".

In some embodiments, the search entry 214 may indicate visual description information of at least one of the set of product items. For example, as shown in FIG. 2B, the search entry 214 may include product pictures 221, 222, and 223 corresponding to all or part of the product items in the set of product items. In some embodiments, the pictures 221, 222, and 223 may include, for example, pictures determined based on the result of the product search. Alternatively, the pictures 221, 222 and 223 may include image portions corresponding to the product objects in the video content determined based on the product object detection process.

In some embodiments, the set of video description information items may be presented according to a predetermined presentation order. Such presentation order may be determined, for example, based on a recognition process of the set of product objects in the video content 210.

In some examples, the presentation order may be determined based on an appearance order of the set of product objects in the video content 210. For example, the pictures 221 to 223 may correspond to, for example, product objects appearing in the video content 210 from earliest to latest.

In other examples, the presentation order may be determined based on a ranking of recognition confidence levels of the set of product objects. For example, the recognition confidence level of the product object corresponding to the picture 221 may be higher than the recognition confidence level of the product object corresponding to the picture 222, and the recognition confidence level of the product object corresponding to the picture 222 may be higher than the recognition confidence level of the product object corresponding to the picture 223.

In this way, it may be more convenient for the user to determine the product item associated with the video content 210, to help the user decide whether to further view the detailed information of the product.

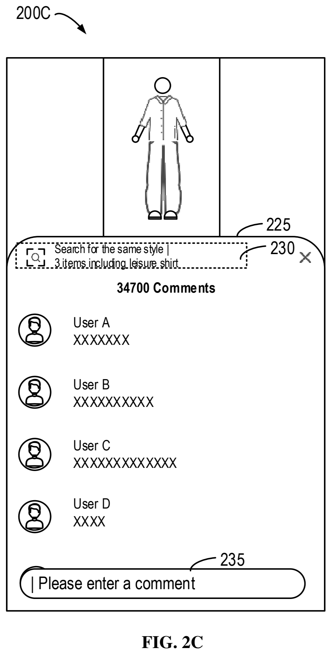

In some embodiments, the terminal device 110 may present, at a predetermined position of the comment area of the video content 210, the product search entry corresponding to the determined set of product items. FIG. 2C illustrates an example interface 200C according to some embodiments of the present disclosure.

For example, the terminal device 110 may receive a comment viewing request for the video content 210. For example, the terminal device 110 may receive the user's triggering operation on a comment control, or may receive a predetermined gesture interaction corresponding to viewing comments.

Further, as shown in FIG. 2C, the terminal device 110 may present a comment area 225 of the video content 210. Such comment area 225 may include, for example, a set of comments regarding the video content 210, and an input control 235.

In addition, the terminal device 110 may present the product search entry 230 at a predetermined location (e.g., top) of the comment area 225. As shown in FIG. 2C, the product search entry 230 may not present information associated with the product item, for example. Alternatively, similar to the product search entry 212 or the product search entry 214 discussed above, the product search entry 230 may present the number of the product items, description information of the product items, and the like.

In some embodiments, the terminal device 110 may receive a trigger operation of the user on the product search entry (for example, the product search entry 212 in FIG. 2A, the product search entry 214 in FIG. 2B, or the product search entry 230 in FIG. 2C), and present the product search interface.

FIG. 3 illustrates a schematic diagram of an example of a product search interface 300 according to some embodiments of the present disclosure. As shown in FIG. 3, the product search interface 300 presents a set of visual contents corresponding to the set of product objects. For example, the product search interface 300 may present the set of visual contents, and the pictures 321, 322, and 323 corresponding to the set of product objects. Such pictures 321 to 323 may be, for example, image portions corresponding to the product objects in the video frame.

In some embodiments, the terminal device 110 may receive selection of a target visual content in the set of visual contents. Accordingly, the terminal device 110 may present, in the product search interface 300, a search result corresponding to the target product item, where the target product item corresponds to the target product object having the target visual content.

For example, the product search interface 300 may, for example, present the search result 320 corresponding to the product item "leisure shirt" by default. The user may, for example, click the picture 322 to switch to obtaining the search result corresponding to the "leisure pants".

It should be understood that any suitable search technique may be used to determine the search result, and the present disclosure is not intended to be limited to the specific determining manner of the search result.

In the manner discussed above, embodiments of the present disclosure may provide the user with the search entry for the set of product items associated with video content during playback of the video content. Such search entry may be independent of the playing progress of the video content, so that the user can more quickly obtain the product items associated with the entire video content, so as to obtain the product search result more efficiently.

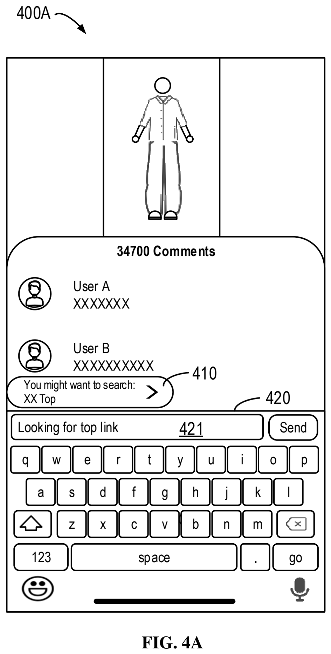

In some embodiments, the terminal device 110 may provide another product search entry. FIG. 4A illustrates an example interface 400A according to some embodiments of the present disclosure. As shown in FIG. 4A, the terminal device 110 may, for example, present an input field 420 associated with the video content. For example, such input field 420 may correspond to a comment input area of the video content.

Further, if the input content 421 in the input field 420 is associated with at least one of the determined set of product items, the terminal device 110 may provide the product search entry 410 in association with the input field 420.

For example, such product search entry 410 may indicate description information of at least one matched product item, for example, textual description information and/or video description information.

Further, after receiving the trigger operation on the product search entry 410, the terminal device 110 may accordingly present the product search interface. Such product search interface may include, for example, the product search interface 300 as discussed with reference to FIG. 3.

In some embodiments, such product search interface may, for example, be configured to present the search result of the product item matching the input content 421 by default.

In another embodiment, the terminal device 110 may, for example, only present the search result of the product item matching the input content 210 in the product search interface.

It should be understood that the acquisition and analysis of such input content 421 is performed with the user's knowledge and authorization.

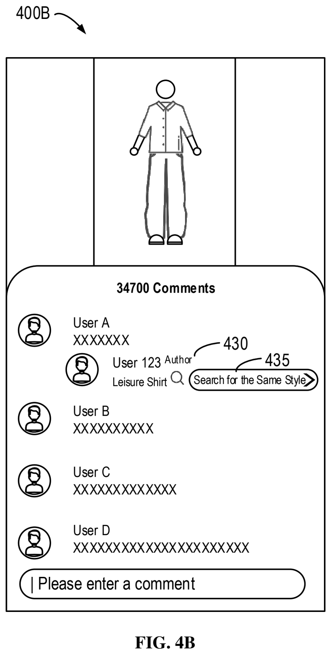

In still other embodiments, the terminal device 110 may, for example, present the product search entry in association with a comment for the video content. FIG. 4B illustrates an example interface 400B according to some embodiments of the present disclosure.

As shown in FIG. 4B, the terminal device 110 may present a set of comments regarding the video content. Further, if a target comment 430 in the set of comments is associated with at least one of the determined set of product items, the product search entry 435 may be provided in association with the target comment 430.

For example, such product search entry 435 may indicate description information of at least one matched product item, for example, textual description information and/or video description information.

Further, after receiving the trigger operation on the product search entry 435, the terminal device 110 may accordingly present the product search interface. Such product search interface may include, for example, the product search interface 300 as discussed with reference to FIG. 3.

In some embodiments, such product search interface may be configured, for example, to present a search result of a product item matching the target comment 430 by default.

In another embodiment, the terminal device 110 may, for example, only present the search result of the product item matching the target comment 430 in the product search interface.

In some embodiments, the comment for associating and providing the product search entry may, for example, be limited to a comment posted by a predetermined user, for example, a comment posted by the poster of the video content or an associated user with the video content.

It should be understood that the processes such as acquisition and analysis of such comment content are performed with knowledge and authorization of the user (including the user sending the comment).

In addition, it should be understood that any text analysis technique may be used to determine the association or match between the input content and/or the comment content and the product item, which is not intended to be limited in this disclosure.

In summary, embodiments of the present disclosure may automatically provide the product search entry associated with the set of commodities in the video content by recognizing the video content, and may provide the product associated with the video to the user based on the selection of the product search entry by the user, which may improve the interaction experience of the user.

### Example Processes

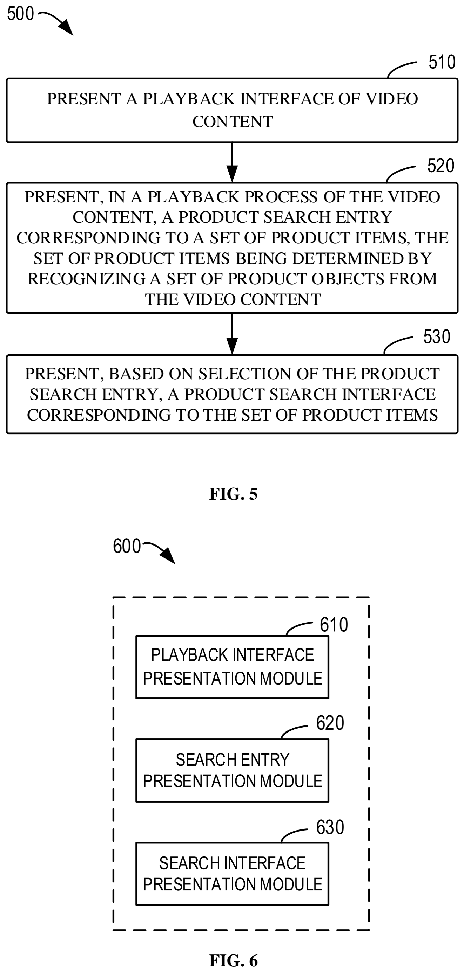

FIG. 5 shows a flowchart of a process 500 for searching according to some embodiments of the present disclosure. The process 500 may be implemented at the terminal device 110. The process 500 is described below with reference to FIG. 1.

As shown in FIG. 5, at block 510, the terminal device 110 presents a playback interface of a video content.

At block 520, the terminal device 110 presents, in a playback process of the video content, a product search entry corresponding to a set of product items. The set of product items is determined by recognizing a set of product objects from the video content.

At block 530, the terminal device 110 presents a product search interface corresponding to the set of product items based on selection of the product search entry.

In some embodiments, the product search entry indicates at least one of: a number of the set of product items; textual description information item of at least one of the set of product items; visual description information item of at least one of the set of product items.

In some embodiments, the product search entry indicates a set of visual description information items corresponding to the set of product items.

In some embodiments, the set of visual description information items are presented based on a target order. The target order is determined based on a recognition process of the set of product objects.

In some embodiments, the target order is determined based on at least one of: an appearance order of the set of product objects in the video content; a ranking of recognition confidence levels of the set of product objects.

In some embodiments, presenting the product search entry corresponding to the set of product items includes: presenting the product search entry in a playback area of the playback interface for playing the video content.

In some embodiments, presenting the product search entry corresponding to the set of product items includes: presenting a comment area in response to a comment viewing request for the video content; and presenting, at a preset position of the comment area, the product search entry corresponding to the set of product items.

In some embodiments, the product search interface presents a set of visual contents corresponding to the set of product objects.

In some embodiments, the process 500 further includes: in response to selection of target visual content in the set of visual contents, presenting a search result corresponding to the target product item in the product search interface, the target product item corresponding to the target product object having the target visual content.

In some embodiments, the product search entry is a first product search entry, and the process 500 further includes: presenting a set of comments of the video content; and in response to a target comment of the set of comments being associated with a target product item in the set of product items, providing a second product search entry in association with the target comment.

In some embodiments, the product search interface is a first product search interface, and the process 500 further includes: presenting a second product search interface based on selection for the second product search entry, the second product search interface corresponding to the set of product items or the target product item.

In some embodiments, the process 500 further includes: presenting an input field associated with the video content; and in response to input content in the input field being associated with at least one of the set of product items, providing a third product search entry in association with the input field.

### Example Apparatus and Device

Embodiments of the present disclosure further provide a corresponding apparatus for implementing the above method or process. FIG. 6 illustrates a schematic structural block diagram of an apparatus 600 for searching according to some embodiments of the present disclosure. The apparatus 600 may be implemented or included in the terminal device 110. The various modules/components in the apparatus 600 may be implemented by hardware, software, firmware, or any combination thereof.

As shown, the apparatus 600 includes a playback interface presentation module 610 configured to present a playback interface of video content. The apparatus 600 further includes a search entry presentation module 620 configured to present, in a playback process of the video content, a product search entry corresponding to a set of product items. The set of product items are determined by recognizing a set of product objects in the video content. The apparatus 600 further includes a search interface presentation module 630 configured to present a product search interface corresponding to the set of product items based on selection of the product search entry.

In some embodiments, the product search entry indicates at least one of: a number of the set of product items; textual description information of at least one of the set of product items; visual description information of at least one of the set of product items.

In some embodiments, the product search entry indicates a set of visual description information items corresponding to a set of product items.

In some embodiments, the set of visual description information items are presented based on a target order. The target order is determined based on a recognition process of the set of product objects.

In some embodiments, the target order is determined based on at least one of: an appearance order of the set of product objects in the video content; a ranking of recognition confidence levels of the set of product objects.

In some embodiments, the search entry presentation module 620 includes: a first presentation module configured to present the product search entry in a playback area of the play interface for playing the video content.

In some embodiments, the search entry presentation module 620 includes: a comment area presentation module configured to present a comment area in response to a comment viewing request for the video content; and a second presentation module configured to present, at a preset position of the comment area, a product search entry corresponding to the set of product items.

In some embodiments, the product search interface presents a set of visual contents corresponding to the set of product objects.

In some embodiments, the apparatus 600 further includes: a search result presentation module configured to present, in response to selection of target visual content in the set of visual contents, a search result corresponding to a target product item in the product search interface, the target product item corresponding to a target product object having the target visual content.

In some embodiments, the product search entry is a first product search entry, and the apparatus 600 further includes: a comment presentation module configured to present a set of comments for the video content; and a first entry provision module configured to provide, in response to a target comment of the set of comments being associated with a target product item in the set of product items, a second product search entry in association with the target comment.

In some embodiments, the product search interface is a first product search interface, and the apparatus 600 further includes: a second interface presentation module configured to present a second product search interface based on selection of the second product search entry, where the second product search interface corresponds to the set of product items or the target product item.

In some embodiments, the apparatus 600 further includes: an input field presentation module configured to present an input field associated with the video content; and a second entry provision module configured to provide, in response to input content in the input field being associated with at least one of the set of product items, a third product search entry in association with the input field.

The modules and/or units included in the apparatus 600 may be implemented in various ways, including software, hardware, firmware, or any combination thereof. In some embodiments, one or more modules and/or units may be implemented using software and/or firmware, such as machine-executable instructions stored on a storage medium. In addition to or as an alternative to machine-executable instructions, some or all of the modules and/or units in the apparatus 600 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

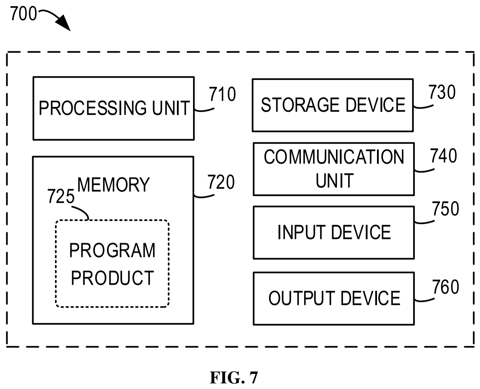

FIG. 7 illustrates a block diagram of an electronic device 700 in which one or more embodiments of the present disclosure may be implemented. It should be understood that the electronic device 700 illustrated in FIG. 7 is merely illustrative and should not constitute any limitation on the functionality and scope of the embodiments described herein. The electronic device 700 shown in FIG. 7 may be configured to implement the terminal device 110 and/or the server 130 in FIG. 1.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of electronic device 700.

Electronic device 700 typically includes a plurality of computer storage media. Such media may be any available media accessible to the electronic device 700, including, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 730 may be a removable or non-removable medium and may include a machine-readable medium, such as a flash drive, magnetic disk, or any other medium, which may be capable of storing information and/or data (e.g., training data for training) and may be accessed within electronic device 700.

The electronic device 700 may further include additional removable/non-removable, volatile/non-volatile storage media. Although not shown in FIG. 7, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 is configured to communicate with another electronic device through a communication medium. Additionally, the functionality of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 750 may be one or more input devices such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, external devices such as storage devices, display devices, etc. , communicate with one or more devices that enable a user to interact with the electronic device 700, or communicate with any device (e.g., a network card, a modem, etc. ) that enables the electronic device 700 to communicate with one or more other electronic devices. Such communication may be performed via an input/output (I/O) interface (not shown).

According to example embodiments of the present disclosure, there is provided a computer-readable storage medium having computer-executable instructions stored thereon, where the computer-executable instructions are executed by a processor to implement the methods described above. According to an example embodiment of the present disclosure, a computer program product is further provided, the computer program product being tangibly stored on a non-transient computer readable medium and including computer executable instructions, the computer executable instructions being executed by a processor to implement the methods described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical application, or improvements to the technology in the marketplace, or to enable others of ordinary skill in the art to understand the various embodiments disclosed herein.

## Claims

1. A method for searching, comprising:
presenting a playback interface of video content;
presenting, in a playback process of the video content, a product search entry corresponding to a set of product items, the set of product items being determined by recognizing a set of product objects from the video content; and
presenting, based on selection of the product search entry, a product search interface corresponding to the set of product items.

2. The method of claim 1, wherein the product search entry indicates at least one of:
a number of the set of product items;
textual description information item of at least one of the set of product items;
visual description information item of at least one of the set of product items.

3. The method of claim 2, wherein the product search entry indicates a set of visual description information items corresponding to the set of product items.

4. The method of claim 3, wherein the set of visual description information items are presented based on a target order, the target order being determined based on a recognition process of the set of product objects.

5. The method of claim 4, wherein the target order is determined based on at least one of:
an appearance order of the set of product objects in the video content; or
a ranking of recognition confidence levels of the set of product objects.

6. The method of claim 1, wherein presenting the product search entry corresponding to the set of product items comprises:
presenting the product search entry in a playback area of the playback interface for playing the video content.

7. The method of claim 1, wherein presenting the product search entry corresponding to the set of product items comprises:
presenting a comment area in response to a comment viewing request for the video content; and
presenting, at a preset position of the comment area, the product search entry corresponding to the set of product items.

8. The method of claim 1, wherein the product search interface presents a set of visual contents corresponding to the set of product objects.

9. The method of claim 8, further comprising:
presenting, in response to selection of target visual content in the set of visual contents, a search result corresponding to a target product item in the product search interface, the target product item corresponding to a target product object having the target visual content.

10. The method of claim 1, wherein the product search entry is a first product search entry, and the method further comprises:
presenting a set of comments for the video content; and
in response to a target comment of the set of comments being associated with at least one of the set of product items, providing a second product search entry in association with the target comment.

11. The method of claim 10, wherein the product search interface is a first product search interface, and the method further comprises:
presenting, based on selection of the second product search entry, a second product search interface corresponding to the set of product items or the target product item.

12. The method of claim 1, further comprising:
presenting an input field associated with the video content; and
in response to input content in the input field being associated with at least one product item of the set of product items, providing a third product search entry in association with the input field.

13. An apparatus for searching, comprising:
a playback interface presentation module configured to present a playback interface of video content;
a search entry presentation module configured to present, in a playback process of the video content, a product search entry corresponding to a set of product items, the set of product items being determined by recognizing a set of product objects from the video content; and
a search interface presentation module configured to present, based on selection of the product search entry, a product search interface corresponding to the set of product items.

14. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 12.

15. A computer-readable storage medium having stored thereon a computer program, the computer program, when executed by a processor, implementing the method of any of claims 1 to 12.
